# EUROPÄISCHE PATENTSCHRIFT

(11) **EP 1 208 132 B1**
(45) Veröffentlichungstag und Bekanntmachung des Hinweises auf die Patenterteilung: **20.07.2011**
(21) Anmeldenummer: 00953196.3
(22) Anmeldetag: 23.08.2000
(51) Int. Cl.: C08G 65/10, C08G 65/30, C08G 18/48

(54) **POLYETHERALKOHOLE**
POLYETHER ALCOHOLS
ALCOOLS DE POLYETHER

(30) Priorität: 31.08.1999 DE 19941242
(43) Veröffentlichungstag der Anmeldung: 29.05.2002
(73) Patentinhaber: BASF SE, 67056 Ludwigshafen (DE)
(72) Erfinder: HARRE, Kathrin, D-01109 Dresden (DE); LORENZ, Reinhard, D-48366 Laer (DE); GROSCH, Georg, Heinrich, D-67098 Bad Dürkheim (DE); ERBES, Jörg, D-76137 Karlsruhe (DE); JUNGE, Dieter, D-67227 Frankenthal (DE); BAUER, Stephan, D-49179 Ostercappeln (DE); BAUM, Eva, D-01987 Schwarzheide (DE); OSTROWSKI, Thomas, D-44581 Castrop-Rauxel (DE)
(86) Internationale Anmeldenummer: PCT/EP2000/008218
(87) Internationale Veröffentlichungsnummer: WO 2001/016209

(56) Entgegenhaltungen:
- EP-A- 0 692 507
- DD-B- 203 734
- GB-A- 1 054 788
- US-A- 4 144 386
- US-A- 4 487 854
- US-A- 5 763 682
- US-A- 5 958 994

## Beschreibung

Die Erfindung betrifft Polyetherole, ihre Herstellung sowie ihre Verwendung zur Herstellung von Polyurethanen.

Polyetheralkohole werden in großen Mengen zur Herstellung von Polyurethanen eingesetzt. Ihre Herstellung erfolgt zumeist durch katalytische Anlagerung von niederen Alkylenoxiden, insbesondere Ethylenoxid und Propylenoxid, an H-funktionelle Starter. Als Katalysatoren werden zumeist basische Metallhydroxide oder Salze verwendet, wobei das Kaliumhydroxid die größte praktische Bedeutung hat.

Bei der Synthese von Polyetheralkoholen mit langen Ketten und Hydroxylzahlen von ca. 26 bis ca. 60 mg KOH/g, wie sie besonders zur Herstellung von Polyurethan-Weichschäumen eingesetzt werden, kommt es bei fortschreitendem Kettenwachstum zu Nebenreaktionen, die zu Störungen im Kettenaufbau führen. Diese Nebenprodukte werden als ungesättigte Bestandteile bezeichnet und führen zu einer Beeinträchtigung der Eigenschaften der resultierenden Polyurethan-Materialien. Insbesondere haben diese ungesättigten Bestandteile, die eine OH-Funktionalität von 1 aufweisen, folgende Konsequenzen:
● Sie sind aufgrund ihres z.T. sehr niedrigen Molekulargewichtes flüchtig und erhöhen so den Gesamtgehalt an flüchtigen Bestandteilen im Polyetherpolyol und in den daraus hergestellten Polyurethanen, insbesondere Polyurethan-Weichschäumen.
● Sie wirken bei der Herstellung des Polyurethans als Kettenabbrecher, weil sie die Vernetzung des Polyurethans bzw. den Aufbau des Molekulargewichtes des Polyurethans verzögern bzw. verringern.

Es ist daher technisch sehr wünschenswert, die ungesättigten Bestandteile soweit als möglich zu vermeiden.

Ein Weg zur Herstellung von Polyetheralkoholen mit einem geringen Gehalt an ungesättigten Bestandteilen ist die Verwendung von Multimetallcyanidkatalysatoren, zumeist Zinkhexacyanometallaten, als Alkoxylierungskatalysatoren. Es gibt eine große Zahl von Dokumenten, in denen die Herstellung von Polyetheralkoholen mittels derartiger Katalysatoren beschrieben wird. So wird in DD-A-203 735 und DD-A-203 734 die Herstellung von Polyetheralkoholen unter Verwendung von Zinkhexacyanocobaltat beschrieben. Durch Verwendung von Multimetallcyanidkatalysatoren kann der Gehalt an ungesättigten Bestandteilen im Polyetherpolyol auf ca. 0,003 bis 0,009 meq/g abgesenkt werden - bei konventioneller Katalyse mit Kaliumhydroxid findet man etwa 10-fache Mengen (ca. 0,03 bis 0,08 meq/g).

Auch die Herstellung der Multimetallcyanidkatalysatoren ist bekannt. Üblicherweise erfolgt die Herstellung dieser Katalysatoren, indem Lösungen von Metallsalzen, wie Zinkchlorid, mit Lösungen von Alkali- oder Erdalkalimetallcyanometallaten, wie Kaliumhexacyanocobaltat, umgesetzt werden. Zur entstehenden Fällungssuspension wird in der Regel sofort nach dem Fällungsvorgang eine wassermischbare, Heteroatome enthaltende Komponente zugegeben. Diese Komponente kann auch bereits in einer oder in beiden Eduktlösungen vorhanden sein. Diese wassermischbare, Heteroatome enthaltende Komponente kann beispielsweise ein Ether, Polyether, Alkohol, Keton oder eine Mischung davon sein. Derartige Verfahren sind beispielsweise in US 3,278,457, US 3,278,458, US 3,278,459, US 3,427,256, US 3,427,334 und US 3,404,109 beschrieben.

Ein Problem bei der Verwendung von Polyetheralkoholen, die mittels Multimetallcyanidkatalysatoren hergestellt wurden, besteht darin, daß sich diese Polyole bei der Herstellung der Polyurethane anders verhalten als Polyetheralkohole, die mit den gleichen Einsatzstoffen, jedoch unter Verwendung von Alkalimetallhydroxiden als Katalysatoren, hergestellt wurden. Diese Effekte zeigen sich insbesondere bei Polyetheralkoholen, deren Ketten aus mehreren Alkylenoxiden aufgebaut sind.

So hat sich gezeigt, daß Polyetheralkohole mit einem statistischen Endblock aus Propylenoxid und Ethylenoxid, die mittels Multimetallcyaniden als Katalysatoren hergestellt wurden, eine deutlich höhere Reaktivität aufweisen als gleich aufgebaute Polyetheralkohole, die mittels Kaliumhydroxid als Katalysator hergestellt wurden. Diese erhöhte Reaktivität, die auf einen höheren Gehalt an primären Hydroxylgruppen zurückzuführen ist, ist für die meisten Anwendungen derartiger Polyetheralkohole sehr störend.

So wird in WO 97/27,236 (EP 876,416) ein Polyetheralkohol für den Einsatz in hochelastischen Weichschäumen beschrieben, der einen Propylenoxid-Innenblock, der höchstens 35 Gew.-% der gesamten Alkylenoxidmenge umfaßt, und einem oder mehreren externen Blöcken aus Ethylenoxid und Propylenoxid mit einem Gehalt von mindestens 2 Gew.-% Ethylenoxid besteht, wobei der Innenblock zumindest teilweise und die externen Blöcke vollständig mittels Multimetallcyanidkatalysatoren katalysiert werden. Derartige Polyetheralkohole sind jedoch, wie ausgeführt, wesentlich reaktiver als handelsübliche, basisch katalysierte Polyetheralkohole und können somit nicht ohne weiteres in Polyurethansysteme eingearbeitet werden.

Die geschilderten Probleme zeigen sich besonders bei Polyurethanschäumen, insbesondere bei Weichschäumen, und am deutlichsten bei Blockweichschäumen. Insbesondere kommt es zu Rißbildungen im Schaum und zu einer Verschlechterung der mechanischen Eigenschaften der Schaumstoffe.

Eine Möglichkeit, diesen Mangel zu beheben, besteht in einer Veränderung der Anteile der verwendeten Alkylenoxide bei der Herstellung der Polyetheralkohole. Hier sind die Variationsmöglichkeiten jedoch nur gering, da eine solche Veränderung Probleme bei der Einstellung der Schaumeigenschaften bewirken würde, die zumeist unerwünscht sind. Veränderungen in der Rezeptierung der Polyurethane, mit denen die veränderte Reaktivität der Polyetheralkohole ausgeglichen werden kann, sind auch meist mit negativen Auswirkungen auf die Schaumeigenschaften verbunden.

Eine weitere Möglichkeit, diesen Mangel zu beheben, wird in EP-A-654 056 vorgeschlagen, indem den mittels Multimetallcyanidkatalysatoren hergestellten Polyetheralkoholen nach der Entfernung des Katalysators Alkalimetalloxide und -hydroxide und/oder Erdalkalimetalloxide und -hydroxide in einer Menge von 0,5 bis 10 ppm zugesetzt werden.

Es hat sich jedoch gezeigt, daß mittels Multimetallcyanidkatalysatoren hergestellte Polyetheralkohole, denen die in EP-A-654 056 beschriebenen Verbindungen zugesetzt wurden, zur der Herstellung von Polyurethan-Weichschaumstoffen nicht einsetzbar sind. Insbesondere zeigten so hergestellte Schaumstoffe ein schlechtes Aushärteverhalten mit einer ausgeprägten Rißbildung. Außerdem weisen derartige Weichschaumstoffe eine ungenügende Offenzelligkeit auf.

Überraschenderweise wurde nun gefunden, daß Polyetheralkohole, die mittels Multimetallcyanidkatalysatoren hergestellt wurden, die gleiche Reaktivität aufweisen wie Polyetheralkohole mit gleichen Anteilen von Ethylenoxid und Propylenoxid in der Polyetherkette, die mit Kaliumhydroxid katalysiert wurden, wenn bei den mittels Multimetallcyanidkatalysatoren hergestellten Polyetheralkoholen am Ende der Polyetherkette ein Propylenoxidblock eingebaut wird.

Gegenstand der Erfindung sind demzufolge Polyetheralkohole mit einem Äquivalentgewicht von größer 500 g/mol herstellbar durch katalytische Anlagerung von Ethylenoxid und Propylenoxid, dadurch gekennzeichnet, daß als Katalysator mindestens eine Multimetallcyanidverbindung eingesetzt wird und am Kettenende ein Block aus Propylenoxideinheiten angelagert wird.

Gegenstand der Erfindung sind weiterhin ein Verfahren zur Herstellung von Polyetheralkoholen mit einem Äquivalentgewicht von größer 500 g/mol durch katalytische Anlagerung von Ethylenoxid und Propylenoxid, dadurch gekennzeichnet, daß als Katalysator mindestens eine Multimetallcyanidverbindung eingesetzt wird und am Kettenende ein Block aus einem Alkylenoxid mit mindestens drei Kohlenstoffatomen, insbesondere Propylenoxid, angelagert wird.

Gegenstand der Erfindung sind weiterhin ein Verfahren zur Herstellung von Polyurethanen, vorzugsweise Polyurethan-Weichschaumstoffen, insbesondere Blockweichschaum, durch Umsetzung von Polyisocyanaten mit den erfindungsgemäßen Polyetheralkoholen, sowie die nach diesem Verfahren hergestellten Polyurethane.

In einer bevorzugten Ausführungsform der vorliegenden Erfindung enthält der Endblock aus einem Alkylenoxid mit mindestens drei Kohlenstoffatomen, insbesondere Propylenoxid, eine Menge von 2 bis 50 Gew.-%, vorzugsweise 2 bis 20 Gew-% und besonders bevorzugt 5 bis 15 Gew.-% Alkylenoxideinheiten, jeweils bezogen auf die Gesamtmasse des Polyetheralkohols.

Die erfindungsgemäßen Polyetheralkohole weisen einen Gehalt an sekundären Hydroxylgruppen von vorzugsweise mindestens 80 %, besonders bevorzugt mindestens 90 % und insbesondere mindestens 95 %, jeweils bezogen auf die Gesamtmenge der Hydroxylgruppen, auf. Der Gehalt an ungesättigten Anteilen liegt vorzugsweise unter 0,015 meq/g. Der Wert wurde tritrimetrisch über die Jodzahl bestimmt nach der Prüfnorm BASF Schwarzheide GmbH PPU 00/03-12.

Die Anlagerung des Endblocks aus Alkylenoxiden mit mindestens drei Kohlenstoffatomen, insbesondere Propylenoxid, kann nach verschiedenen Möglichkeiten erfolgen. So ist es möglich, Polyetheralkohole mit einer reinen blockweisen Anordnung der Alkylenoxide herzustellen. Bei dieser Verfahrensvariante wird jeweils nur ein Alkylenoxid gleichzeitig zudosiert, danach das nächste, und so fort. Als letzter Block wird dabei erfindungsgemäß ein reiner Propylenoxidblock angelagert.

In einer weiteren bevorzugten Variante wird an die Startsubstanz zunächst gegebenenfalls ein reiner Alkylenoxidblock, vorzugsweise Propylenoxid, angelagert, anschließend erfolgt die Dosierung eines Gemisches aus Ethylenoxid und Propylenoxid, wobei das Verhältnis von Ethylenoxid und Propylenoxid über die Zeit der Dosierung variabel oder vorzugsweise konstant bleibt, und am Ende der Alkylenoxiddosierung erfolgt erfindungsgemäß die Anlagerung eines reinen Propylenoxidblockes.

In einer weiteren bevorzugten Variante wird ebenfalls vorzugsweise zunächst gegebenenfalls ein reiner Alkylenoxidblock, vorzugsweise Propylenoxid, und danach ebenfalls ein Gemisch aus Ethylenoxid und Propylenoxid angelagert, wobei der Anteil des Ethylenoxids im Gemisch im Verlaufe der Dosierung vermindert wird, bis am Ende der Dosierung nur noch Propylenoxid dosiert wird.

Es ist auch möglich, dem Endblock aus mindestens einem Alkylenoxid mit mindestens drei Kohlenstoffatomen geringe Mengen an Ethylenoxid zuzusetzen, wenn dadurch die Eigenschaften der erfindungsgemäßen Polyetheralkohole nicht beeinträchtigt werden. Unter geringen Mengen wird hierbei ein Anteil von maximal 5 Gew.-%, vorzugsweise maximal 2 Gew.-%, jeweils bezogen auf das Gewicht des Endblocks, verstanden.

Als Alkylenoxide mit maximal 3 Kohlenstoffatomen wird insbesondere Propylenoxid eingesetzt. Weitere bevorzugte Verbindungen sind Butylenoxid, Styroloxid oder auch epoxidierte fette Öle, wie epoxidiertes Sojaöl. Die genannten Verbindungen können einzeln oder in Form von beliebigen Mischungen untereinander eingesetzt werden.

Die erfindungsgemäßen Polyetheralkohole haben zumeist eine Funktionalität von 2 bis 8, vorzugsweise 2 bis 4 und insbesondere 2 bis 3 und ein Äquivalentgewicht von größer 500 g/mol. Als Startsubstanzen kommen als höherfunktionelle Startsubstanzen insbesondere Zuckeralkohole, beispielsweise Sorbit, Hexit und Sucrose, zumeist jedoch zwei- und/oder dreifunktionelle Alkohole oder Wasser, entweder als Einzelsubstanz oder als Gemisch aus mindestens 2 der genannten Startsubstanzen, zum Einsatz. Beispiele für zweifunktionelle Startsubstanzen sind Ethylenglykol, Diethylenglykol, Propylenglykol, Dipropylenglykol, Butandiol-1,4 und Pentantandiol-1,5. Beispiele für dreifunktionelle Startsubstanzen sind Trimethylolpropan, Pentaerythrit und insbesondere Glyzerin. Die Startsubstanzen können auch in Form von Alkoxylaten, insbesondere solche mit einem Molekulargewicht M_{w} im Bereich von 62 bis 15000 g/mol zum Einsatz kommen. Diese Alkoxylate können in einem gesonderten Verfahrensschritt hergestellt werden, wobei zu ihrer Herstellung auch andere Katalysatoren als Multimetallcyanidverbindungen, beispielsweise Alkalihydroxide, zum Einsatz kommen können. Bei der Verwendung von Alkalihydroxiden zur Herstellung der Alkoxylate ist es notwendig, den Katalysator nahezu vollständig zu entfernen, da Alkalihydroxide die Multimetallcyanidkatalysatoren desaktivieren können. Der Vorteil der Verwendung von Alkoxylaten als Startsubstanzen liegt im schnelleren Anspringen der Reaktion, nachteilig ist die Einführung eines zusätzlichen Verfahrensschrittes sowie, wie ausgeführt, gegebenenfalls die aufwendige Reinigung des Alkoxylates.

Zu Beginn der Umsetzung wird die Startsubstanz vorgelegt und, soweit notwendig, Wasser und andere leicht flüchtige Verbindungen entfernt. Dies erfolgt zumeist durch Destillation, vorzugsweise unter Vakuum. Dabei kann der Katalysator bereits in der Startsubstanz vorhanden sein, es ist jedoch auch möglich, den Katalysator erst nach der Behandlung der Startsubstanz zuzusetzen. Bei der letztgenannten Variante wird der Katalysator thermisch weniger belastet. Vor der Dosierung der Alkylenoxide ist es üblich, den Reaktor zu inertisieren, um unerwünschte Reaktionen der Alkylenoxide mit Sauerstoff zu vermeiden. Danach erfolgt die Dosierung der Alkylenoxide, wobei die Anlagerung in der oben beschriebenen Weise durchgeführt wird. Die Anlagerung der Alkylenoxide erfolgt zumeist bei Drücken im Bereich von 0,01 bar und 10 bar und Temperaturen im Bereich von 50 bis 200°C, vorzugsweise 90 bis 150°C. Es hat sich gezeigt, daß die Geschwindigkeit, mit der die Alkylenoxide dosiert werden, ebenfalls einen Einfluß auf die Reaktivität der entstehenden Polyetheralkohole hat. Je schneller die Alkylenoxide dosiert werden, desto höher ist die Reaktivität der resultierenden Polyetheralkohole.

Die für das erfindungsgemäße Verfahren eingesetzten Multimetallcyanidkatalysatoren haben zumeist die allgemeine Formel (I)

M¹ₐ[M²(CN)_{b}(A)_{c}]_{d} · fM¹gXₙ · h(H_{2O}) · eL (I)

ist, wobei
- M¹: ein Metallion, ausgewählt aus der Gruppe, enthaltend Zn2+, Fe2+, Co3+, Ni2+, Mn2+, Co2+, Sn2+, Pb2+, Mo4+, Mo6+, A13+, V4+, V5+, Sr2+, W4+, W6+, Cr2+, Cr3+, Cd2+,
- M²: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether, Ester, Harnstoffe, Amide, Nitrile, und Sulfide,
bedeuten, sowie
a, b, c, d, g und n so ausgewählt sind, daß die Elektroneutralität der Verbindung gewährleistet ist, und
- e: die Koordinationszahl des Liganden,
- f: eine gebrochene oder ganze Zahl größer oder gleich 0
- h: eine gebrochene oder ganze Zahl größer oder gleich 0 bedeuten.

Die Herstellung dieser Verbindungen erfolgt nach allgemein bekannten Verfahren, indem man die wäßrige Lösung eines wasserlöslichen Metallsalzes mit der wäßrigen Lösung einer Hexacyanometallatverbindung, insbesondere eines Salzes oder einer Säure, vereinigt und dazu während oder nach der Vereinigung einen wasserlöslichen Liganden gibt.

Der Katalysator wird zumeist in einer Menge von kleiner 1 Gew.-%, vorzugsweise in einer Menge von kleiner 0,5 Gew.-%, besonders bevorzugt in einer Menge von kleiner 1000 ppm und insbesondere in einer Menge von kleiner 500 ppm, jeweils bezogen auf das Gewicht des Polyetheralkohols, eingesetzt.

Für das erfindungsgemäße Verfahren werden bevorzugt Multimetallcyanidkatalysatoren eingesetzt, die durch Vereinigung von Metallsalz und Cyanometallat-Wasserstoffsäure gemäß EP-A-862,947 hergestellt werden. Ferner sind Multimetallcyanidkatalysatoren bevorzugt, die Acetat, Formiat oder Propionat enthalten, ein Röntgenbeugungsmuster zeigen, wie es in DE 97,42,978 dargestellt ist, oder in einer monoklinen Struktur kristallisieren.

Diese Multimetallcyanidkatalysatoren sind kristallin und besitzen, falls sie einphasig hergestellt werden können, eine strenge Stöchiometrie bezüglich der Metallsalz- und der Cyanometall-Komponente. So besitzt ein gemäß DE 197,42,978 hergestellter Multimetallcyanidkatalysator, der Acetat enthält und in einer monoklinen Struktur kristallisiert, immer ein Verhältnis von Zink : Cobalt von 2:1.

Bevorzugt werden von diesen kristallinen Multimetallcyanidkatalysatoren jene, die eine plättchenförmige Morphologie aufweisen. Als plättchenförmig wird ein Teilchen dann verstanden, wenn Breite und Länge des Teilchens mehr als fünfmal größer sind als die Dicke des Teilchens.

Durch die Verwendung von kristallinen und stöchiometrischen Multimetallcyanidkatalysatoren besteht im Vergleich zur Verwendung von amorphen und nicht-stöchiometrischen Multimetallcyanidkatalysatoren der Vorteil, daß durch Maßschneiderung der Festkörper- und Oberflächenstruktur unerwünschte polymerisationsaktive Zentren, die z.B. zur Bildung hochmolekularer Polyole führen können, vermieden werden können.

Die Reaktion kann kontinuierlich oder batchweise durchgeführt werden. Nach Beendigung der Umsetzung werden die nicht umgesetzten Monomeren und leichtflüchtige Verbindungen aus der Reaktionsmischung entfernt, üblicherweise mittels Destillation. Der Katalysator kann im Polyetheralkohol verbleiben, üblicherweise wird er jedoch entfernt, beispielsweise mittels Filtration.

Wie ausgeführt, werden die erfindungsgemäßen Polyetheralkohole vorzugsweise mit Polyisocyanaten zu Polyurethanen, bevorzugt zu Polyurethan-Schaumstoffen und thermoplastischen Polyurethanen, insbesondere zu Polyurethan-Weichschaumstoffen, umgesetzt. Dabei können die erfindungsgemäßen Polyetheralkohole einzeln, als Gemisch aus mindestens zwei erfindungsgemäßen Polyetheralkoholen oder im Gemisch mit anderen Verbindungen mit mindestens zwei aktiven Wasserstoffatomen eingesetzt werden.

Als Polyisocyanate kommen hierbei alle Isocyanate mit zwei oder mehreren Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Als Verbindungen mit mindestens zwei mit Isocyanatgruppen reaktiven Gruppen, die im Gemisch mit den erfindungsgemäßen Polyetheralkoholen eingesetzt werden, können Amine, Mercaptane, vorzugsweise jedoch Polyole verwendet werden. Unter den Polyolen haben die Polyetherpolyole und die Polyesterpolyole die größte technische Bedeutung. Die zur Herstellung von Polyurethanen eingesetzten Polyetherpolyole werden zumeist durch basisch katalysierte Anlagerung von Alkylenoxiden, insbesondere Ethylenoxid und/oder Propylenoxid, an H-funktionelle Startsubstanzen hergestellt. Polyesterpolyole werden zumeist durch Veresterung von mehrfunktionellen Carbonsäuren mit mehrfunktionellen Alkoholen hergestellt.

Zu den Verbindungen mit mindestens zwei mit Isocyanatgruppen reaktiven Gruppen gehören auch die Kettenverlängerer und/oder Vernetzer, die gegebenenfalls mit eingesetzt werden können. Dabei handelt es sich um mindestens zweifunktionelle Amine und/oder Alkohole mit Molekulargewichten im Bereich von 60 bis 400.

Als Treibmittel werden zumeist Wasser und/oder bei der Reaktionstemperatur der Urethanreaktion gasförmige, gegenüber den Ausgangsstoffen der Polyurethane inerte Verbindungen, sogenannte physikalisch wirkende Treibmittel, sowie Gemische daraus eingesetzt. Als physikalisch wirkende Treibmittel werden Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid und/oder Edelgase eingesetzt.

Als Katalysatoren werden insbesondere Aminverbindungen und/oder Metallverbindungen, insbesondere Schwermetallsalze und/oder metallorganische Verbindungen, eingesetzt. Insbesondere werden als Katalysatoren bekannte tertiäre Amine und/oder mit organische Metallverbindungen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-Formyl-N,N'-dimethyl-butylendiamin, N-Dimethylaminoethylmorpholin, 3,3'-Bis-dimethylamino-di-n-propylamin und/oder 2,2'-Dipiparazin-diisopropylether, Diazabicyclo-(2,2,2)-octan Dimethylpiparazin, N,N'-Bis-(3-amino-propyl)ethylendiamin und/oder Tris-(N,N-dimethylaminopropyl)-s-hexahydrotriazin, 4-Chlor-2,5-dimethyl-1-(N-methylaminoethyl)-imidazol, 2-Aminopropyl-4,5-dimethoxy-1-methylimidazol, 1-Amino-propyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Amino-propyl)-2-methylimidazol, bevorzugt 1,4-Diazabicyclo-[2,2,2]-octan und/oder Imidazole, besonders bevorzugt 1-(3-Amino-propyl)imidazol, 1-(3-Aminopropyl)-2-methylimidazol und/oder 1,4-Diazabicyclo-[2,2,2]-octan. Die beschriebenen Katalysatoren können einzeln oder in Form von Mischungen eingesetzt werden.

Als Hilfsmittel und/oder Zusatzstoffe werden beispielsweise Trennmittel, Flammschutzmittel, Farbstoffe, Füllstoffe und/oder Verstärkungsmittel verwendet.

In der Technik ist es üblich, alle Einsatzstoffe mit Ausnahme der Polyisocyanate zu einer sogenannten Polyolkomponente zu vermischen und diese mit den Polyisocyanaten zum Polyurethan umzusetzen.

Die Herstellung der Polyurethane kann nach dem sogenannten one-shot-Verfahren oder nach dem Prepolymerverfahren erfolgen. Die Polyurethan-Weichschaumstoffe können sowohl Blockschäume als auch Formschäume sein.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-Hanser-Verlag München Wien, 1. Auflage 1966, 2. Auflage 1983 und 3. Auflage 1993.

Überraschenderweise hat sich gezeigt, daß die erfindungsgemäßen Polyetheralkohole sich in den Polyurethansystemen verhalten wie konventionelle, mit Alkalihydroxiden katalysierte Polyetheralkohole.

Die Verarbeitbarkeit von Polyolen, die mittels Multimetallcyanidkatalysatoren hergestellt wurden und die keinen Propylenoxid-Endblock aufweisen, ist, insbesondere bei der Verwendung dieser Polyole zur Herstellung von Polyurethan-Weichschaumstoffen, besonders bei der Herstellung von Blockweichschaumstoffen, sehr eingeschränkt. Die hohe Reaktivität dieser Polyole erlaubt es nicht, rißfreie und 100% offenzellige Schaumstoffe, insbesondere Blockweichschaumstoffe zu erhalten. Die Erhöhung der Katalyse, insbesondere der Zinn-Katalyse, bei der Schaumherstellung, führt zu einer Verminderung der Rißbildung, aber gleichzeitig nimmt die Offenzelligkeit der Schaumstoffe stark ab, die Schaumstoffe schrumpfen. Diese Polyole sind daher nicht für die Herstellung von Blockweichschaumstoffen geeignet. Diese Nachteile wurden bei der Verwendung der erfindungsgemäßen Polyetheralkohole vollständig überwunden.

Die Erfindung soll an nachstehenden Beispielen näher erläutert werden.

### Beispiel 1 (Vergleich)

Die Synthese wurde in einem gereinigten und getrockneten 10-1-Rührautoklaven durchgeführt. Es wurden bei 50°C 211,6 g eines Propoxylates aus Glyzerin und Propylenoxid mit einem Molekulargewicht M_{w} von 400 g/mol in den Rührautoklaven gegeben und mit 0,8 g eines Multimetallcyanidkatalysators versetzt. Der Kesselinhalt wurde mit Stickstoff inertisiert und insgesamt 1,5 h bei 110°C im Vakuum behandelt. Bei 125°C wurden 3,5 bar Stickstoff zugegeben und anschließend innerhalb von 5 h 15 min ein Gemisch aus 2018,1 g Propylenoxid und 297,4 g Ethylenoxid zudosiert. Es wurde weitere 30 min gerührt und bei 105°C und 9 mbar entgast. Die Aufarbeitung des Polyetheralkohols erfolgte durch Filtration. Der entstandene Polyetheralkohol wies folgende Kennwerte auf: Hydroxylzahl: 35,2 mg KOH/g;
Viskosität bei 25°C: 934 mPas;
Gehalt an Zn/Co: 3/6 ppm;
Gehalt an primären Hydroxylgruppen: 10 % (bestimmt nach Prüfnorm BASF Schwarzheide PFO/A 00/22-28)

### Beispiel 2

Die Synthese wurde in einem gereinigten und getrockneten 10-1-Rührautoklaven durchgeführt. Es wurden bei 50°C 437,9 g propoxylierten Glyzerins mit einem Molekulargewicht M_{w} von 400 g/mol in den Rührkessel gegeben und mit 1,5 g eines Multimetallcyanidkatalysators versetzt. Der Kesselinhalt wurde mit Stickstoff inertisiert und insgesamt 1,5 h bei 110°C im Vakuum behandelt. Bei 125°C wurden 3,5 bar Stickstoff zugegeben und anschließend innerhalb von 2 h 44 min ein Gemisch aus 3462,2 g Propylenoxid und 585,4 g Ethylenoxid zudosiert. Nach 10 min Pause wurden 487,8 g Propylenoxid zudosiert. Es wurde weitere 30 min gerührt und bei 105°C und 9 mbar entgast. Die Aufarbeitung des Polyetheralkohols erfolgte durch Filtration. Der entstandene Polyetheralkohol wies folgende Kennwerte auf:
Hydroxylzahl: 34,2 mg KOH/g;
Viskosität bei 25°C: 880 mPas;
Gehalt an Zn/Co: 4/9 ppm;
Gehalt an primären Hydroxylgruppen: 5 % (bestimmt nach Prüfnorm BASF Schwarzheide PFO/A 00/22-28)

### Beispiel 3 (Vergleich)

Die Synthese wurde in einem gereinigten und getrockneten 20-1-Rührautoklaven durchgeführt. Es wurden 2,0 kg propoxylierten Glyzerins mit einem Molekulargewicht M_{w} von 400 g/mol (L3300) sowie 0,196 g propoxyliertes Ethylenglykol der Molmasse 250 g/mol in den Rührkessel gegeben und mit 19,2 g Multimetallcyanidkatalysator versetzt. Der Kesselinhalt wurde mit Stickstoff inertisiert und insgesamt 1,5 h bei 110°C im Vakuum behandelt. Bei 115°C wurden 3,5 bar Stickstoff zugegeben und anschließend innerhalb von 3,5 h erst 3,45 kg Propylenoxid, anschließend 12,37 kg eines ein Gemisches aus 10,5 kg Propylenoxid und 1,87 kg Ethylenoxid zudosiert. Es wurde weitere 0,6 h gerührt und bei 115°C und 9 mbar entgast. Die Aufarbeitung des Polyetheralkohols erfolgte durch Filtration. Der entstandene Polyetheralkohol wies folgende Kennwerte auf:
Hydroxylzahl: 47,4 mg KOH/g;
Viskosität bei 25°C: 536 mPas;
Gehalt an Zn/Co: 4/9 ppm;
Gehalt an primären Hydroxylgruppen: 10 % (bestimmt nach Prüfnorm BASF Schwarzheide PFO/A 00/22-28)

### Beispiel 4

Die Synthese wurde in einem gereinigten und getrockneten 20-1-Rührautoklaven durchgeführt. Es wurden 2,0kg g eines propyxylierten Glyzerins mit einem Molekulargewicht M_{w} von 400 sowie 0,196 g propoxyliertes Ethylenglykol der Molmasse 250 g/mol in den Rührkessel gegeben und mit 19 g Multimetallcyanidkatalysator versetzt. Der Kesselinhalt wurde mit Stickstoff inertisiert und insgesamt 1,5 h bei 110°C im Vakuum behandelt. Bei 115°C wurden 3,5 bar Stickstoff zugegeben und anschließend innerhalb von 3,5 h erst 3,45 kg Propylenoxid, anschließend 12,1 kg eines ein Gemisches aus 10,2 kg Propylenoxid und 1,9 kg Ethylenoxid zudosiert. Anschließend wurden 2,0 kg Propylenoxid angelagert. Es wurde weitere 0,6 h gerührt und bei 115°C und 9 mbar entgast. Die Aufarbeitung des Produkts erfolgte durch Filtration. Der entstandene Polyetheralkohol wies folgende Kennwerte auf: Hydroxylzahl: 47,4 mg KOH/g;
Viskosität bei 25°C: 578 mPas;
Gehalt an Zn/Co: 22/55 ppm;
Gehalt an primären Hydroxylgruppen: 5 % (bestimmt nach Prüfnorm BASF Schwarzheide PFO/A 00/22-28)
Zur Bestimmung der primären Hydroxylgruppen werden die Hydroxylgruppen des Polyetheralkohols mit Trichloracetylisocyanat derivatisiert und dieses Umsetzungsprodukt mittels NMR-Spektroskopie vermessen. Die Vermessung erfolgte mit einem NMR-Spektrometer vom Typ Bruchner DPX 250. Dabei zeigen primäre und sekundäre Hydroxylgruppen unterschiedliche Peaks.

**Tabelle 1**

| **Beispiel** | | **Vergleichs-Beispiel 5** | **Vergleichs-Beispiel 6** | **Beispiel 7** | **Beispiel 8** | **Beispiel 9** |
|---|---|---|---|---|---|---|
| **A-Komponte** | OHZ | Menge | Menge | Menge | Menge | Menge |
| | [mgKOH/g] | [g] | [g] | [g] | [g] | [g] |
| Polyol A | 48,3 | 1000 | 1000 | | | |
| Polyol B | 47,2 | | | 1000 | 1000 | 1000 |
| Wasser | 6233 | 38 | 38 | 38 | 38 | 38 |
| BF 2370 | 0 | 10 | 10 | 10 | 10 | 10 |
| N 201:N206 - 3:1 | 526 | 3,2 | 3,2 | 3,2 | 3,2 | 3,2 |
| K 29 | 0 | 2, 0 | 2,5 | 2,0 | 2,5 | 3,4 |
| Summe | | 1053,2 | 1053,7 | 1053,2 | 1053,7 | 1054,6 |

| **B-Komponte** | NCO | Menge | Menge | Menge | Menge | Menge |
|---|---|---|---|---|---|---|
| | [%] | [g] | [g] | [g] | [g] | [g] |
| Lupranat^{®} T80 A | 48,3 | 489,1 | 489,1 | 487,1 | 487,1 | 487,1 |
| Index | | 110 | 110 | 110 | 110 | 110 |
| **Prüfdaten** | Einheit | | | | | |
| Startzeit | [s] | 9 | 9 | 9 | 9 | 9 |
| Abbindezeit | [s] | 65 | 65 | 65 | 70 | 65 |
| Steigzeit | [s] | 70 | 70 | 70 | 75 | 70 |
| Steighöhe | [mm] | 275 | 280 | 280 | 280 | 280 |
| Steighöhe nach 5 min | [mm] | 270 | 275 | 275 | 275 | 275 |
| Rohdichte | [kg/m³] | 24,6 | 24,0 | 24,7 | 24,5 | 24,2 |
| Stauchhärte bei 40 % | [kPa] | X | X | 3,8 | 3,9 | 4,1 |
| Zugfestigkeit | [kPa] | X | X | 67 | 71 | 78 |
| Dehnung | [%] | X | X | 128 | 124 | 120 |
| Druckverformungsrest bei 50 % | [%] | X | X | 2,4 | 2,5 | 2,7 |
| Rückprall-Elastizität | [N] | X | X | 47 | 49 | 49 |
| Eindruckhärte | [%] | X | X | 200 | 221 | 230 |
| Luftdurchlässigkeit | [mmWs] | 10 | 10 | 10 | 10 | 30 |
| Aussehen | | Sn-Risse | Sn-Risse | Homogener, feinzelliger Schaumstoff | Homogener, feinzelliger Schaumstoff | Homogener, feinzelliger Schaumstoff |

| | | | | | | |
|---|---|---|---|---|---|---|
| X - Werte konnten nicht bestimmt werden | | | | | | |

### Beispiele 5 bis 7

### Herstellung der Polyisocyanat-Polyadditionsprodukte

Die in der Tabelle 1 aufgeführte Einsatzstoffe wurden, außer dem Isocyanat Lupranat^{®} T80 A (BASF Aktiengesellschaft), intensiv vermischt. Danach wurde das Lupranat^{®} T80 A unter Rühren hinzugegeben und die Reaktionsmischung in eine offene Form (400 x 400 x 400 mm) vergossen, worin sie zum Polyurethan-Schaumstoff ausschäumte. Die Werte für die Verschäumung sowie die Eigenschaften der entstandenen Polyurethanschäume sind ebenfalls in Tabelle 1 aufgeführt.

| | |
|---|---|
| Polyol A: | Polyetherol, gemäß Beispiel 3 |
| Polyol B: | Polyetherol, gemäß Beispiel 4 |
| Lupragen^{®} N201: | 1,4-Diazabicyclo-[2,2,2]-octan (33 %) in Dipropylenglykol (67 %), (BASF Aktien-gesellschaft) |
| Lupragen^{®} N206: | Bis-(2-Dimethylaminoethyl)ether (70 %) in Dipropylenglykol (30 %), (BASF Aktiengesell-schaft) |
| Kosmus^{®} 29: | Zinn-II-Salz der Ethylhexansäure, (Goldschmidt AG) |
| Tegostab^{®} BF 2370: | Silikonstabilisator (Goldschmidt AG) |
| Lupranat^{®} T80: | 2,4-/2,6-Toluylendiisocyanatgemisch (BASF Aktiengesellschaft) |

| **Prüfmethode** | **Prüfnorm** |
|---|---|
| Rohdichte | DIN 53420 |
| Zugversuch | |
| -Zugfestigkeit | DIN 53571 |
| -Dehnung | |
| Druckverformungsrest | DIN 53572 |
| Rückprall-Elastizi-tät | DIN 53573 |
| Eindruckhärte | DIN 53576 |
| Stauchhärte | DIN 53577 |

## Patentansprüche

1. Verfahren zur Herstellung von Polyetheralkoholen mit einem Äquivalentgewicht von größer 500 g/mol durch katalytische Anlagerung von Ethylenoxid und Propylenoxid an H-funktionelle Startsubstanzen, **dadurch gekennzeichnet, daß** als Katalysator mindestens eine Multimetallcyanidverbindung eingesetzt und am Kettenende ein Block aus einem Alkylenoxid mit mindestens drei Kohlenstoffatomen im Molekül angelagert wird.

2. Verfahren nach Anspruch 1, **dadurch gekennzeichnet, daß** der Block aus einem Alkylenoxid mit mindestens drei Kohlenstoffatomen im Molekül eine Menge an Alkylenoxid von 2 bis 50 Gew.-% bezogen auf die Gesamtmasse des Polyetheralkohols, enthält.

3. Verfahren nach Anspruch 1, **dadurch gekennzeichnet, daß** der Block aus einem Alkylenoxid mit mindestens drei Kohlenstoffatomen im Molekül eine Menge an Alkylenoxid von 2 bis 20 Gew.-%, bezogen auf die Gesamtmasse des Polyetheralkohols, enthält.

4. Verfahren nach Anspruch 1, **dadurch gekennzeichnet, daß** der Block aus einem Alkylenoxid mit mindestens drei Kohlenstoffatomen im Molekül eine Menge an Alkylenoxid von 5 bis 15 Gew.-% bezogen auf die Gesamtmasse des Polyetheralkohols, enthält.

5. Verfahren nach Anspruch 1, **dadurch gekennzeichnet, daß** als Alkylenoxid mit mindestens drei Kohlenstoffatomen im Molekül Propylenoxid eingesetzt wird.

6. Verfahren nach Anspruch 1, **dadurch gekennzeichnet, daß** der Polyetheralkohol einen Gehalt an sekundären Hydroxylgruppen von mindestens 80 %, bezogen auf die gesamten Hydroxylgruppen, aufweist.

7. Verfahren nach Anspruch 1, **dadurch gekennzeichnet, daß** der Polyetheralkohol einen Gehalt an sekundären Hydroxylgruppen von mindestens 90 %, bezogen auf die gesamten Hydroxylgruppen, aufweist.

8. Verfahren nach Anspruch 1, **dadurch gekennzeichnet, daß** der Polyetheralkohol einen Gehalt an sekundären Hydroxylgruppen von mindestens 95 %, bezogen auf die gesamten Hydroxylgruppen, aufweist.

9. Verfahren nach Anspruch 1, **dadurch gekennzeichnet, daß** an die Startsubstanz zunächst ein Block aus Propylenoxideinheiten, danach ein Gemisch aus Ethylenoxid und Propylenoxid und danach am Kettenende ein Block aus Propylenoxideinheiten angelagert wird.

10. Verfahren nach Anspruch 1, **dadurch gekennzeichnet, daß** bei dem Gemisch aus Ethylenoxid und Propylenoxid im Verlauf der Dosierung der Anteil an Ethylenoxid vermindert wird, bis am Dosierende reines Propylenoxid dosiert wird.

11. Polyetheralkohole, herstellbar nach einem der Ansprüche 1 bis 10.

12. Verfahren zur Herstellung von Polyurethanen durch Umsetzung von Polyisocyanaten mit Verbindungen mit mindestens zwei mit Isocyanatgruppen reaktiven Wasserstoffatomen, **dadurch gekennzeichnet, daß** als Verbindungen mit mindestens zwei mit Isocyanatgruppen reaktiven Wasserstoffatomen mindestens ein Polyetheralkohol nach Anspruch 11 eingesetzt wird.

13. Verwendung von Polyetheralkoholen nach Anspruch 11 zur Herstellung von Polyurethanen.

14. Polyurethane, insbesondere Polyurethan-Weichschaumstoffe, herstellbar nach Anspruch 12.

## Claims

1. A process for preparing polyether alcohols having an equivalent weight of greater than 500 g/mol by catalytic addition of ethylene oxide and propylene oxide onto H-functional initiator substances, wherein at least one multimetal cyanide compound is used as catalyst and a block of an alkylene oxide having at least three carbon atoms in the molecule is added on at the end of the chain.

2. The process according to claim 1, wherein the block of an alkylene oxide having at least three carbon atoms in the molecule makes up from 2 to 50% by weight of the total mass of the polyether alcohol.

3. The process according to claim 1, wherein the block of an alkylene oxide having at least three carbon atoms in the molecule makes up from 2 to 20% by weight of the total mass of the polyether alcohol.

4. The process according to claim 1, wherein the block of an alkylene oxide having at least three carbon atoms in the molecule makes up from 5 to 15% by weight of the total mass of the polyether alcohol.

5. The process according to claim 1, wherein the alkylene oxide having at least three carbon atoms in the molecule is propylene oxide.

6. The process according to claim 1, wherein at least 80% of the total number of hydroxyl groups present in the polyether alcohol are secondary hydroxyl groups.

7. The process according to claim 1, wherein at least 90% of the total number of hydroxyl groups present in the polyether alcohol are secondary hydroxyl groups.

8. The process according to claim 1, wherein at least 95% of the total number of hydroxyl groups present in the polyether alcohol are secondary hydroxyl groups.

9. The process according to claim 1, wherein firstly a block of propylene oxide units, then a mixture of ethylene oxide and propylene oxide and then, at the end of the chain, a block of propylene oxide units are added onto the initiator substance.

10. The process according to claim 1, wherein the proportion of ethylene oxide in the mixture of ethylene oxide and propylene oxide is reduced during the course of the metered addition until pure propylene oxide is being introduced at the end of the metered addition.

11. A polyether alcohol which can be prepared according to any of claims 1 to 10.

12. A process for producing polyurethanes by reacting polyisocyanates with compounds containing at least two hydrogen atoms which are reactive toward isocyanate groups, wherein the compounds containing at least two hydrogen atoms which are reactive toward isocyanate groups comprise at least one polyether alcohol according to claim 11.

13. The use of polyether alcohols according to claim 11 for producing polyurethanes.

14. A polyurethane, in particular a flexible polyurethane foam, which can be produced according to claim 12.

## Revendications

1. Procédé pour la préparation de polyétheralcools présentant un poids équivalent supérieur à 500 g/mole par addition catalytique d'oxyde d'éthylène et d'oxyde de propylène sur des substances de départ à fonctionnalité H, **caractérisé en ce qu'**on utilise comme catalyseur au moins un composé multimétallique du cyanure et on ajoute en l'extrémité de chaîne un bloc d'un oxyde d'alkylène comprenant au moins trois atomes de carbone dans la molécule.

2. Procédé selon la revendication 1, **caractérisé en ce que** le bloc d'un oxyde d'alkylène comprenant au moins trois atomes de carbone dans la molécule contient une quantité d'oxyde d'alkylène de 2 à 50% en poids par rapport à la masse totale du polyétheralcool.

3. Procédé selon la revendication 1, **caractérisé en ce que** le bloc d'un oxyde d'alkylène comprenant au moins trois atomes de carbone dans la molécule contient une quantité d'oxyde d'alkylène de 2 à 20% en poids par rapport à la masse totale du polyétheralcool.

4. Procédé selon la revendication 1, **caractérisé en ce que** le bloc d'un oxyde d'alkylène comprenant au moins trois atomes de carbone dans la molécule contient une quantité d'oxyde d'alkylène de 5 à 15% en poids par rapport à la masse totale du polyétheralcool.

5. Procédé selon la revendication 1, **caractérisé en ce qu'**on utilise de l'oxyde de propylène comme oxyde d'alkylène comprenant au moins trois atomes de carbone dans la molécule.

6. Procédé selon la revendication 1, **caractérisé en ce que** le polyétheralcool présente une teneur en groupes hydroxyle secondaires d'au moins 80%, par rapport à la totalité des groupes hydroxyle.

7. Procédé selon la revendication 1, **caractérisé en ce que** le polyétheralcool présente une teneur en groupes hydroxyle secondaires d'au moins 90%, par rapport à la totalité des groupes hydroxyle.

8. Procédé selon la revendication 1, **caractérisé en ce que** le polyétheralcool présente une teneur en groupes hydroxyle secondaires d'au moins 95%, par rapport à la totalité des groupes hydroxyle.

9. Procédé selon la revendication 1, **caractérisé en ce que** la substance de départ est additionnée, d'abord d'un bloc d'unités d'oxyde de propylène, puis d'un mélange d'oxyde d'éthylène et d'oxyde de propylène, puis en l'extrémité de chaîne d'un bloc d'unités d'oxyde de propylène.

10. Procédé selon la revendication 1, **caractérisé en ce que** dans le mélange d'oxyde d'éthylène et d'oxyde de propylène, au cours du dosage, la proportion d'oxyde d'éthylène est diminuée jusqu'à ce qu'on dose, à la fin du dosage, de l'oxyde de propylène pur.

11. Polyétheralcools, pouvant être préparés selon l'une quelconque des revendications 1 à 10.

12. Procédé pour la préparation de polyuréthanes par transformation de polyisocyanates avec des composés comprenant au moins deux atomes d'hydrogène réactifs avec des groupes isocyanate, **caractérisé en ce qu'**on utilise comme composés comprenant au moins deux atomes d'hydrogène réactifs avec des groupes isocyanate au moins un polyétheralcool selon la revendication 11.

13. Utilisation de polyétheralcools selon la revendication 11 pour la préparation de polyuréthanes.

14. Polyuréthanes, en particulier mousses souples de polyuréthane, pouvant être préparés selon la revendication 12.
